Europäisches Patentamt

(19) European Patent Office

Office européen des brevets

(11) Veröffentlichungsnummer: **0 081 850**
**B1**

(12) EUROPÄISCHE PATENTSCHRIFT

(45) Veröffentlichungstag der Patentschrift:
09.04.86

(51) Int. Cl.⁴: **A 41 D 31/00,** A 41 D 31/02,
B 32 B 33/00

(21) Anmeldenummer: 82111624.1

(22) Anmeldetag: 15.12.82

(54) Bekleidungsstück mit einer wasserdichten und wasserdampfdurchlässigen Funktionsschicht.

(30) Priorität: 16.12.81 DE 3149878

(43) Veröffentlichungstag der Anmeldung:
22.06.83 Patentblatt 83/25

(45) Bekanntmachung des Hinweises auf die Patenterteilung:
09.04.86 Patentblatt 86/15

(84) Benannte Vertragsstaaten:
AT BE CH DE FR GB IT LI LU NL SE

(56) Entgegenhaltungen:
DE - A - 2 626 765
DE - A - 2 737 756
FR - A - 2 491 737
US - A - 4 034 417
US - A - 4 234 637

(73) Patentinhaber: W.L. Gore & Co. GmbH,
Wernher-von-Braun-Strasse 18, D-8011 Putzbrunn (DE)

(72) Erfinder: Kleis, Rudolf, Birkenweg 15, D-8011 Putzbrunn
(DE)
Erfinder: Kramer, Valentin, Fischerstrasse 2 c,
8152 Feldenkirchen-Westerham (DE)

(74) Vertreter: Altenburg, Udo, Dipl.-Phys. et al, Patent- und
Rechtsanwälte Bardehle-Pagenberg-Dost-Altenburg &
Partner Postfach 86 06 20, D-8000 München 86 (DE)

## Beschreibung

Die Erfindung betrifft ein Bekleidungsstück mit einer wasserdichten und wasserdampfdurchlässigen (schweißdurchlässigen) Funktionsschicht, wobei die Funktionsschichet aus mikroporösem Material aus Tetrafluräthylenpolyneren, insbes. Polytetrafluräthylen besteht.

Wetterfeste Bekleidungsstücke sind in den verschiedensten Ausföhrungen bekannt. Sie haben zumeist den Nachteil, daß sie wasser- und winddicht, jedoch nicht wasserdampfdurchlässig sind. Wasserdampfdurchlässige Bekleidungsstücke haben zumeist den Nachteil, daß sie nicht oder nicht ausreichend wasser- und winddicht sind.

Es sind außerdem Bekleidungsstücke bekannt (vgl. DE-A-27 37 756), die aus Laminaten mit einer wasserdichten und wasserdampfdurchlässigen Funktionsschicht aus mikroporösem Material aus Tetrafluräthylenpolymeren, insbesondere polytetrafluräthylen, bestehen. Diese Bekleidungsstück haben sich in der Praxis sehr bewährt. Sie sind jedoch, insbesondere im Hinblick auf ihre Griffigkeit, Beschädigungsanfälligkeit und ihren Herstellungsaufwand, noch verbesserungsfähig.

Die Aufgabe der vorliegenden Erfindung besteht darin, griffige und beschädigungsunanfällige Bekleidungsstücke der eingangs genannten Art zu schaffen, deren Herstellungsaufwand gering ist und bei denen die wasserdichte und wasserdampfdurchlässige Funktionsschicht ohne Abänderungen in einracher Weise vielfältig verwendbar ist.

Diese Aufgabe wird bei einem Bekleidungsstück der eingangs genannten Art erfindungsgemäß gelöst durch eine Lage aus obermaterial und mindestens eine von der Obermateriallage getrennte, die wasserdichte und wasserdampfdurchlässige Funktionsschicht enthaltende innere Lage. Die wasserdichte und wasserdampfdurchlässige Funktionsschicht besteht hierbei vorzugsweise aus einem mikroporösen Material aus Tetrafluräthylenpolymeren, insbesondere Polytetrafluräthylen. In bezug auf die Herstellung und sonstige weitere Eigenschaften dieses mikroporösen Materials wird z.B. auf die DE-A- 21 23 316 verwiesen. Die wasserdichte und wasserdampfdurchlässige Funktionsschicht kann entweder mit einer hautsympathischen Schicht zu einer einzigen inneren Lage laminiert oder als gesonderte, vorzugsweise beidseitig jeweils mit einer Abriebschutzschicht versehene Zwischenlage ausgebildet sein.

Durch diese erfindungsgemäße Konzeption der Einarbeitung der wasserdichten und der wasserdampfdurchlässigen Funktionsschicht in ein Bekleidungsstück kann praktisch jedes in der Bekleidungsindustrie übliche Obermaterial und/oder Futtermaterial verwendet werden. Die die Funktionsschicht enthaltende Lage braucht für jede Konfektionsgröße nur einmal hergestellt zu werden und kann dann in Verbindung mit den verschiedensten Obermaterialien und/oder Futtermaterialien zur Herstellung unterschiedlich aussehender Bekleidungsstücke mit der gemeinsamen Eigenschaft "wasserdicht und wasserdampfdurchlässig (schweißdurchlässig)" verwendet werden. Die Konfektionäre sind also im Design des Obermaterials völlig unabhängig, d.h., es können z.B. erheblich mehr Nähte oder mehrfarbige Designs etc. verwendet werden, ohne daß die Wasserdichtigkeit und Wasserdampfdurchlässigkeit des Bekleidungsstückes beeinträchtigt wird.

Da die wasserdichte und wasserdampfdurchlässige Funktionsschicht extrem dünn und vom obermaterial getrennt ist, besteht für den Träger des Bekleidungsstückes kein Unterschied im textilen Warengriff zu herkömmlicher Bekleidung. Schwierigkeiten und aufwendige Maßnahmen bei der bisherigen Laminierung der Funktionsschicht mit dem obermaterial, die z.B. aus Rückständen der Vorbehandlung, z.B. des Färbens, Waschens etc. des Obermaterials, herrühren, können mit der erfindungsgemäßen Konzeption vollständig eliminiert werden. Außerdem sind, soweit überhaupt erforderlich, weniger Nähte abzudichten. Die ggf. abzudichtenden Nähte sind außerdem innen und daher für den Betrachter unsichtbar.

Die erfindungsgemäße Konzeption kann für Bekleidungsstücke unterschiedlichster Art, d.h. insbesondere für oberbekleidungsstücke, Unterbekleidungsstücke, Kopfbedeckungen und Handschuhe, verwendet werden.

Weitere vorteile, Merkmale und Anwendungsmöglichkeiten der vorliegenden Erfindung ergeben sich aus der nachfolgenden Beschreibung von Ausführungsbeispielen in Verbindung mit der Zeichnung. Darin zeigen:

Fig. 1 eine Vorderansicht eines Anoraks,

Fig. 2 einen schematischen Querschnitt durch einen Anorak gemäß Fig. 1,

Fig. 3 eine Vorderansicht eines Anoraks in einer anderen Ausführungsform,

Fig. 4 einen schematischen Querschnitt durch einen Anorak gemäß Fig. 3 und

Fig. 5 eine Vorderansicht und eine Explosionsdarstellung eines erfindungsgemäßen Handschuhs.

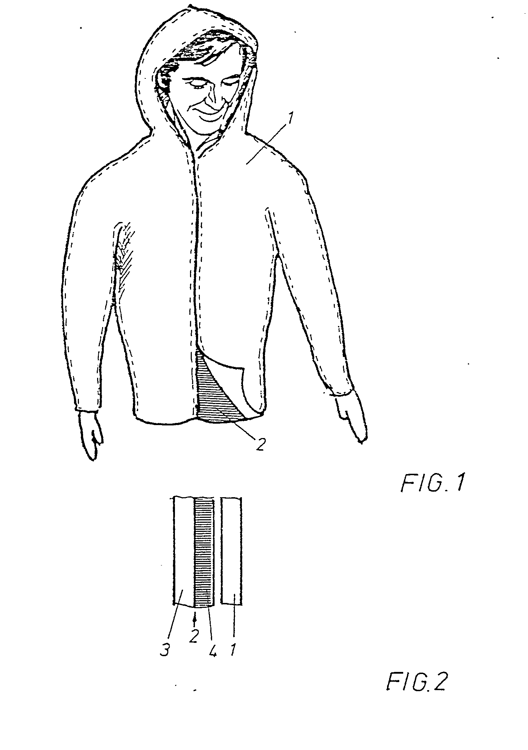

In Fig. 1 ist eine Vorderansicht eines Anoraks dargestellt. Dieser Anorak besteht, wie insbesondere aus Fig. 2 hervorgeht, aus einer Obermateriallage 1 und einer inneren Lage 2, die aus einer wasserdichten und wasserdampfdurchlässigen Funktionsschicht 4, insbesondere aus mikroporösem Material aus Tetrafluoräthylenpolymeren, insbesondere Polytetrafluoräthylen, und einer hautsympathischen Gewebe- oder Gewirkschicht 3 besteht. Die innere Lage 2 ist hier z.B. in den Anorak eingehängt. Die Obermateriallage 1 kann aus den für Anoraks üblichen Materialien, wie Baumwolle oder synthetischen Materialien, bestehen. Die innere Lage 2 wird für jede Konfektionsgröße einheitlich hergestellt und in den Anorak eingehängt. Sie kann lose in dem Anorak sein oder auch leicht mit diesem durch Druckknöpfe, Knöpfe, Reißverschlüsse, Einsteppen oder in ähnlicher Weise verbunden sein. Es wird somit für die verschiedensten Ausführungen von Anoraks einer Konfektionsgröße jeweils nur eine Art einer einhängbaren inneren Lage benötigt.

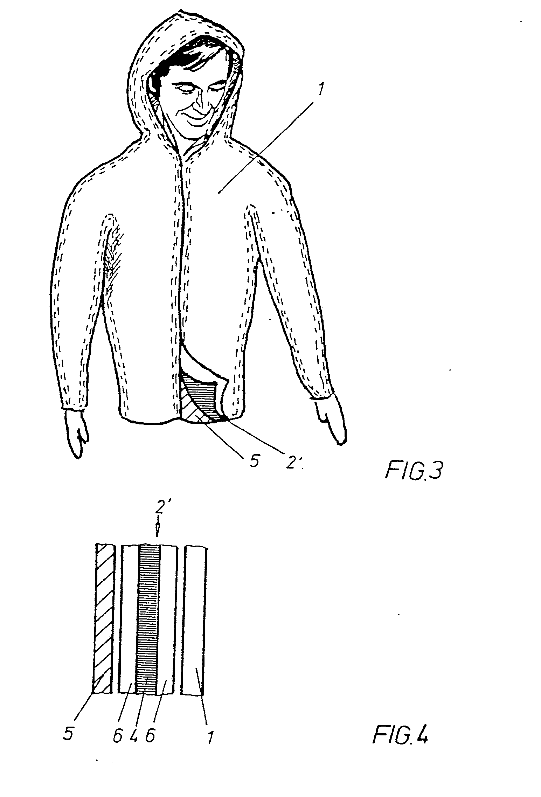

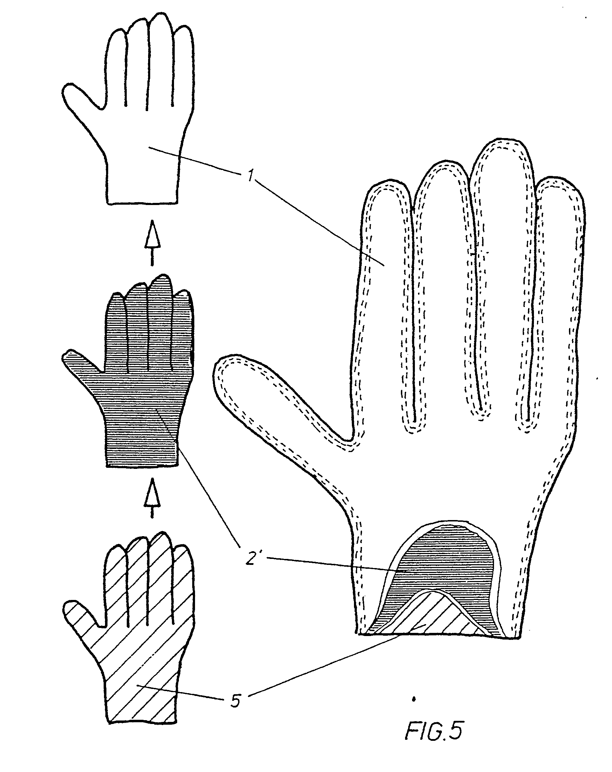

In Fig. 3 und 4 ist eine andere Ausführungsform eines Anoraks dargestellt, welche die Obermateriallage 1, eine die wasserdichte und wasserdampfdurchlässige Funktionsschicht 4 enthaltende Zwischenlage 2' und eine innere Futtermateriallage 5 aufweist. Die Funktionsschicht 4 ist hierbei beidseitig mit Abriebschutzschichten 6 laminiert. Die Zwischenlage 2' liegt somit als dreischichtiges Zwischenfutter zwischen der Obermateriallage 1 und der eigentlichen Futtermateriallage 5.

In Fig. 5 ist eine Vorderansicht eines Handschuhs dargestellt. Dieser Handschuh besteht aus, wie in der Explosionsdarstellung gezeigt, drei ineinandergesteckten einzelnen Lagen bzw. Handschuhen, nämlich einem äußeren Obermaterialhandschuh 1, einem die wasserdichte und wasserdampfdurchlässige Funktionsschicht enthaltenden Zwischenhandschuh 2' und einem inneren Futtermaterialhandschuh 5. Der äußere Handschuh 1 kann hierbei aus jedem für Handschuhe geeigneten Material bestehen. Das gleiche gilt für den inneren Futtermaterialhandschuh 5. Anstelle des zwischenhandschuhs 2', dessen Aufbau der Lage 2' in Fig. 4 entspricht, kann auch ein Zwischenhandschuh verwendet werden, dessen Aufbau der Lage 2 in Fig. 2 entspricht. Hierbei würde der Futtermaterialhandschuh 5 entfallen.

Die die wasserdichte und wasserdampfdurchlässige Funktionsschicht 4 enthaltende Lage kann nur in Teilbereichen des Bekleidungsstückes, insbesondere in den am stärksten vom Wetter beaufschlagten Bereichen, vorgesehen sein. Bei einem Anorak, einem Mantel oder einer Jacke wäre dies z.B. der Schulterbereich. Bei einem Handschuh wäre es z.B. die Seite mit dem Handrücken.

Die Erfindung ist keinesfalls auf die vorgenannten Ausführungsbeispiele beschränkt. Sämtliche Bekleidungsstücke wie Oberbekleidungsstücke, Unterbekleidungsstücke, Kopfbedekkungen etc. sind mit der erfindungsgemäßen Konzeption herstellbar.

**Patentansprüche**

1. Bekleidungsstück mit einer wasserdichten und wasserdampfdurchlässigen Funktionsschicht wobei die Funktionsschicht aus mikroporösem Material aus Tetrafluoräthylenpolymeren, insbesondere Polytetrafluoräthylen, besteht, gekennzeichnet durch eine Lage (1) aus Obermaterial und mindestens eine von der Obermateriallage getrennte, die wasserdichte und wasserdampfdurchlässige Funktionsschicht enthaltende innere Lage (2, 2 ').

2. Bekleidungsstück nach Anspruch 1, dadurch gekennzeichnet, daß mindestens eine innere Lage (2) aus einem zweischichtigen Laminat, bestehend aus der wasserdichten und wasserdampfdurchlässigen Funktionsschicht (4) und einer inneren hautsympathischen Schicht (3), vorgesehen ist.

3. Bekleidungsstück nach Anspruch 1, dadurch gekennzeichnet, daß mindestens zwei getrennte innere Lagen (2', 5) vorgesehen sind, wobei die erste nach der Obermateriallage (1) folgende und eine Zwischenlage bildende innere Lage (2') aus der wasserdichten und wasserdampfdurchlässigen Funktionsschicht (9) und die zweite innere Lage (5) aus einem Futtermaterial besteht.

4. Bekleidungsstück nach Anspruch 3, dadurch gekennzeichnet, daß die wasserdichte und wasserdampfdurchlässige Funktionsschicht (4) beidseitig jeweils mit einer Abriebschutzschicht (6) laminiert ist.

5. Bekleidungsstück nach mindestens einem der Ansprüche 1 bis 4, dadurch gekennzeichnet, daß die die wasserdichte und wasserdampfdurchlässige Funktionsschicht enthaltende Lage (2, 2') mindestens teilweise mit der Obermateriallage (1) und/oder einer gesonderten anderen inneren Lage (5) verbunden ist.

6. Bekleidungsstück nach mindestens einem der Ansprüche 1 bis 4, dadurch gekennzeichnet, daß die die wasserdichte und wasserdampfdurchlässige Funktionsschicht enthaltende Lage (2, 2') keine Verbindung mit der Obermateriallage (1) und/oder einer gesonderten anderen inneren Lage (5) aufweist.

7. Bekleidungsstück nach mindestens einem der Ansprüche 1 bis 6, dadurch gekennzeichnet, daß sich die die wasserdichte und wasserdampfdurchlässige Funktionsschicht enthaltende Lage (2, 2') nur über Teilbereiche, die besonders auffallendem Wasser ausgesetzt sind, erstreckt.

8. Bekleidungsstück nach mindestens einem der Ansprüche 1 bis 7, dadurch gekennzeichnet, daß das Bekleidungsstück ein Oberbekleidungsstück, ein Unterbekleidungsstück, eine Kopfbedeckung oder ein Handschuh ist.

**Claims**

1. A clothing with a waterproof and water vapour permeable function layer consisting of a microporous material of tetrafluoroethylene polymer, particularly polytetrafluoroethylene characterized by a layer (1) of upper material and at least one inner layer (2, 2) being separated from the upper material layer and comprising the waterproof and water vapour permeable function layer.

2. A clothing according to claim 1, characterized in that at least one inner layer (2) is provided being a twolayer laminate consisting of the waterproof and water permeable function layer (4) and an inner layer (3) being compatible with the skin.

3. A clothing according to claim 1, characterized in that at least two separate inner layers (2', 5) are provided whereby the first inner layer (2') following the upper material layer (1) and forming an intermediate layer consists of the waterproof and water permeable function layer (4) and the second inner layer (5) consists of a lining material.

4. A clothing according to claim 3, characterized in that the waterproof and water vapour permeable function layer (4) is laminated at both sides with an abrasion protection layer (6).

5. A clothing according to at least one of claims 1 to 4, characterized in that the layer (2, 2') comprising the waterproof and water vapour permeable function layer is connected at least partly to the upper material layer (1) and/or to a separate other inner layer (5).

6. A clothing according to at least one of claims 1 to 4, characterized in that the layer (2, 2') comprising the waterproof and water vapour permeable function layer has no connection to the upper material layer (1) and/or to a separate other inner layer (5).

7. A clothing according to at least one of claims 1 to 6, characterized in that the layer (2, 2') comprising the waterproof and water vapour permeable function layer extents only over part areas exposed particularly to striking water.

8. A clothing according to at least one of claims 1 to 7, characterized in that the clothing is an overclothing, an underclothing, a headcover or a glove.

**Revendications**

1. Vêtement pourvu d'une couche imperméable à l'eau et perméable à la valeur d'eau, la couche se composant d'un matériau microporeux en polymères de tétrafluoréthylène, notamment de polytétrafluoréthylène, caractérisé par une épaisseur (1) en matériau de dessus et au moins une épaisseir intérieure (2, 2') séparée de l'épaisseur en matériau de dessus et contenant la couche imperméable à l'eau et perméable à la vapeur d'eau.

2. Vêtement selon la revendication 1, caractérisé en ce qu'au moins une épaisseur intérieure (2) est prévue en aggloméré à deux couches comprenant la couche imperméable à l'eau et perméable à la vapeur d'eau (4) et une couche intérieure agréable à la peau (3).

3. Vêtement selon la revendication 1, caractérisé en ce qu'au moins deux épaisseurs intérieures séparées (2', 5) sont prévues, la première épaisseur suivant l'épaisseur en matériau de dessus (1) et une épaisseur intérieure (2') formant épaisseur intermédiaire se composant de la couche imperméable à l'eau et perméable à la vapeur d'eau (4) et la seconde épaisseur intérieure (5) se composant d'un matériau de doublure.

4. Vêtement selon la revendication 3, caractérisé en ce qie la coiche imperméable à l'eau et perméable à la vapeur d'eau (4) est laminée des deux côtés respectivement avec une couche anti-usure (6).

5. Vêtement selon l'une au moins des revendications 1 à 4, caractérisé en ce que l'épaisseir (2, 2') contenant la couche imperméable à l'eau et perméable à la vapeur d'eau est au moins reliée en partie à l'épaisseur en matériau de dessus (1) et/ou à une aitre épaisseur intérieure (5) à part.

6. Vêtement selon l'une au moins des revendications 1 à 4, caractérisé en ce que l'épaisseur (2, 2') contenant la couche imperméable à l'eau et perméable à la vapeur d'eau ne présente pas de jonction avec l'épaisseur en matériau de dessus (1) et/ou avec une autre épaisseur intérieure (5) particulière.

7. Vêtement selon l'une au moins des revendications 1 à 6, caractérisé en ce que l'épaisseur (2, 2') contenant la couche imperméable à l'eau et perméable à la vapeur d'eau ne recouvre que des zones partielles particulièrement exposées à l'eau.

8. Vêtement selon l'une au moins des revendications 1 à 7, caractérisé en ce que le vêtement est un survêtement, un sous-vêtement, une coiffure ou un gant.

FIG.1

FIG.2

FIG.3

FIG.4

FIG.5